# FASCICULE DE BREVET EUROPEEN

(11) **EP 0 437 124 B1**
(45) Date de publication et mention de la délivrance du brevet: **14.09.1994**
(21) Numéro de dépôt: 90403371.9
(22) Date de dépôt: 28.11.1990
(51) Int. Cl.: H02B 1/052

(54) **Dispositif de clipsage pour appareils électriques modulaires à juxtaposer et appareil modulaire muni d'un tel dispositif**
Klemmvorrichtung für nebeneinander liegende modulare elektrische Geräte und modulares Gerät mit einer solchen Vorrichtung
Clipping device for juxtaposed modular electrical apparatus and modular apparatus of such a device

(30) Priorité: 12.01.1990 FR 9000315
(43) Date de publication de la demande: 17.07.1991
(73) Titulaire: HAGER ELECTRO S.A., F-67210 Obernai (FR)
(72) Inventeur: Bilstein, Michelle, F-67120 Soultz Les Bains (FR); Deckert, Francis, F-67190 Mutzig (FR)
(74) Mandataire: Bernasconi, Jean

(56) Documents cités:
- DE-A- 3 732 434
- DE-U- 7 709 171
- GB-A- 1 534 553

## Description

L'invention est relative à un dispositif de clipsage des appareils électriques modulaires à juxtaposer, qui est destiné à assurer la mise en place de ces appareils sur un rail de support muni d'ailes d'accrochage et leur retrait de celui-ci et qui comporte un loquet et un organe élastique de rappel tel qu'un ressort, le loquet pouvant être déplacé contre l'action de l'organe de rappel vers sa position écartée de l'une des ailes du rail de support, lesdits appareils électriques modulaires comportant un boîtier et des bornes latérales destinées à être reliées à une barre omnibus d'alimentation ou de pontage, ou moyen analogue. Ces appareils peuvent être par exemple des coupe-circuit à fusible ou des disjoncteurs unipolaires ou multipolaires ; des télérupteurs ; des télécommandes ; des interrupteurs différentiels ou à commande mécanique, unipolaires ou multipolaires ; ou tous appareils analogues. Par appareils modulaires, on entend des appareils dont l'épaisseur est égale à une valeur fixe ou "module" ou à un multiple de ce module.

Les rails de support sont habituellement de forme en "oméga" obtenue par pliage longitudinal d'un profilé métallique. Le dispositif de clipsage des appareils modulaires est complémentaire de cette forme en "oméga".

Dès lors que les appareils électriques modulaires se trouvent clipsés sur le rail de support et que la barre omnibus a été mise en place, il devient impossible de les retirer du rail sans démontage préalable de ladite barre. En effet, l'agencement du dispositif de clipsage ne permet pas de dégager suffisamment la barre omnibus engagée dans les bornes d'alimentation des appareils. Le montage de ces appareils sur le rail de support rencontre le même genre de problème.

Pour résoudre le problème du retrait des appareils électriques modulaires de leur rail de support sans devoir démonter la barre omnibus, on a déjà proposé (FR-A-2 621 426) d'utiliser un rail de support dont l'aile d'accrochage située du côté de la barre omnibus est subdivisée en éléments déplaçables selon un mouvement perpendiculaire à la direction longitudinale du rail. Le débattement de ces éléments d'aile permet de dégager les bornes latérales de la barre omnibus. Cette solution nécessite cependant l'utilisation d'un rail spécial.

DE-A-37 32 434 décrit un dispositif de clipsage conforme au préambule de la revendication 1 sur rail permettant l'utilisation d'un rail ordinaire et comprenant, d'une part, un loquet déplaçable vers une aile du rail sous l'action d'un ressort, et d'autre part un moyen d'accrochage porté par le boîtier pour s'accrocher sur l'autre aile du rail, ledit loquet étant porté par un tiroir coulissant à la face inférieure du boîtier avec des moyens d'encliquetage permettant d'immobiliser ledit tiroir par rapport au boîtier dans la position dans laquelle le loquet et le moyen de blocage du boîtier sont tous les deux disposés en prise avec les ailes du rail. Cette disposition présente l'inconvénient de nécessiter un tiroir en matière élastique encliquetable, et donc fragile, et demande de prévoir une course importante du tiroir afin d'assurer un écartement suffisant entre les deux moyens de blocage des deux ailes du rail pour pouvoir déposer l'appareil.

L'invention a pour objet de remédier à ces inconvénients tout en conservant une bonne stabilité du montage des appareils modulaires sur leur support.

L'invention a pour objet un dispositif de clipsage dispositif de clipsage d'appareils électriques modulaires à juxtaposer, qui est destiné à assurer la mise en place de ces appareils sur un rail de support muni de deux ailes d'accrochage et leur retrait de celui-ci, et qui comporte un loquet agencé de façon à pouvoir être déplacé entre une position rapprochée de l'une des ailes du rail de support et une position écartée dudit rail contre l'action d'un organe de rappel individuel, tel qu'un ressort qui tend à l'amener vers le centre du boîtier de l'appareil, et un organe de blocage complémentaire agencé pour se bloquer contre l'autre desdites ailes du rail de blocage, lesdits appareils électriques comportant des bornes latérales destinées à être reliées à une barre omnibus d'alimentation ou de pontage, et dans lequel ledit loquet est porté par des moyens agencés de manière à permettre la translation du boîtier de l'appareil électrique modulaire parallèlement au plan passant par les ailes du rail de support, dans le sens du rapprochement ou de l'écartement des bornes latérales par rapport à la barre omnibus,
caractérisé en ce que ledit moyen de blocage est un deuxième loquet opposé au premier loquet par rapport à la barre omnibus, agencé de façon à pouvoir être déplacé entre sa position rapprochée de ladite aile et une position éloignée de ladite aile, contre l'action d'un organe de rappel individuel, tel qu'un ressort, qui tend à l'amener vers le centre du boîtier de l'appareil, ledit second loquet formant un moyen de commande pour la translation du boîtier par rapport audit premier loquet.

Outre un gain de temps important, l'invention facilite la maintenance des installations électriques utilisant ce type de matériel et diminue les risques d'endommagement de la barre omnibus.

Pour atteindre cet objectif, l'invention a pour objet un dispositif de clipsage d'appareils électriques modulaires à juxtaposer, qui est destiné à assurer la mise en place de ces appareils sur un rail de support muni de deux ailes d'accrochage et leur retrait de celui-ci et qui comporte deux loquets dont chacun est agencé de façon à pouvoir être déplacé vers sa position écartée de l'une des ailes du rail de suppport, contre l'action d'un organe de rappel individuel tel qu'un ressort qui tend à l'amener vers le centre du boîtier de l'appareil, lesdits appareils électriques comportant des bornes latérales destinées à être reliées à une borne omnibus d'alimentation ou de pontage, ou moyen analogue, lequel dispositif est essentiellement caractérisé en ce que le boîtier et les loquets sont agencés de manière à permettre la translation du boîtier de l'appareil électrique modulaire parallèlement au plan passant par les ailes du rail de support, dans le sens du rapprochement ou de l'écartement des bornes latérales par rapport à la barre omnibus. Le dispositif permet également de dégager l'accès d'un tournevis au loquet de commande par rapport à la barre de pontage.

Ce dispositif permet d'obtenir le débattement qui manquait aux dispositifs de clipsage usuels des appareils modulaires. C'est ainsi que le DE-U-7709171 montre un dispositif de clipsage selon l'art antérieur mais le boîtier de l'appareil modulaire connu chevauche le rail de support par une encoche dont les dimensions correspondent à celles de ce rail, ce qui empêche de déplacer le boîtier de la façon précisée dans cette revendication 1. Au contraire, l'invention permet de déplacer en translation les appareils modulaires le long d'axes transversaux au rail sur une distance au moins égale à la longueur de la barre omnibus engagée dans les bornes d'alimentation. Une fois la barre omnibus dégagée de la borne, il devient aisé de retirer l'appareil modulaire. Pour le montage, on déplace l'appareil en translation sur une distance au moins égale à la longueur, de la barre omnibus, à engager dans les bornes d'alimentation.

Dans une forme de réalisation préférée de l'invention, le loquet opposé à la barre omnibus constitue l'organe de commande de l'autre loquet, c'est-à-dire celui qui est situé du côté de ladite barre omnibus.

De préférence, le loquet situé du côté de la barre omnibus coopère avec un moyen verrouillable permettant de rendre ledit loquet déplaçable par rapport au boîtier ou d'immobiliser ledit loquet dans sa position de repos alignée avec celui-ci, correspondant à la position du boîtier accroché au rail et relié à la barre omnibus, ou dans sa position écartée par rapport audit boîtier, c'est-à-dire écartée de sa position de repos contre l'action de son organe élastique de rappel.

De préférence encore, le loquet situé du côté de la barre omnibus se prolonge par un élément en forme de lame ou tiroir qui s'étend sensiblement au contact du fond du boîtier pour venir coopérer avec ledit moyen verrouillable situé au voisinage de l'autre loquet.

Le moyen verrouillable comprend avantageusement un taquet monté coulissant dans une cavité pratiquée dans le fond du boîtier et sollicité en direction du tiroir par un moyen élastique tel qu'un ressort, ledit taquet étant agencé de manière à pouvoir venir en prise dans un logement pratiqué dans le tiroir, de façon à réaliser soit l'immobilisation du loquet à tiroir, soit la libération de celui-ci, par rapport au boîtier de l'appareil électrique modulaire.

De préférence, le logement pratiqué dans le tiroir comprend une partie sensiblement alignée avec la direction de débattement du taquet lorsque le loquet à tiroir est dans sa position de repos ainsi qu'une partie sensiblement alignée avec ladite direction de débattement du taquet lorsque ledit loquet à tiroir est dans sa position écartée par rapport au boîtier, le passage du taquet d'une partie à une autre du logement étant assuré par le mouvement relatif du boîtier par rapport au loquet à tiroir lorsque le taquet est actionné contre l'action de son organe élastique vers sa position de libération par rapport au logement.

Le loquet opposé à la barre omnibus comprend avantageusement une rampe conçue pour actionner le taquet contre l'action de son organe élastique lors de l'actionnement dudit loquet dans le sens de son écartement par rapport au rail ou au boîtier.

Le loquet opposé à la barre omnibus peut, sensiblement au sommet de la rampe, comprendre un évidement qui est sensiblement aligné avec la direction de débattement du taquet, lorsque ledit loquet est en position écartée, et qui est destiné à recevoir l'extrémité libre du taquet pour immobiliser ledit loquet opposé à la barre omnibus en position écartée par rapport au boîtier. Lesdites parties du logement pratiqué dans le tiroir peuvent être réunies ensemble par un passage plus étroit agencé de manière à pouvoir servir de guide à l'extrémité libre du taquet. De part et d'autre dudit passage, ledit tiroir peut en outre comporter une came dirigée vers le boîtier et destinée à coopérer avec le taquet pour libérer celui-ci de l'évidement du loquet opposé à la barre omnibus lors du mouvement relatif du boîtier par rapport au tiroir.

L'invention a également pour objet des appareils électriques modulaires du type décrit au début, comprenant le dispositif de clipsage selon l'invention.

L'invention va être maintenant décrite plus en détail à l'aide d'un mode de réalisation pris à titre d'exemple non limitatif et se référant au dessin annexé dans lequel :
la figure 1 est une vue éclatée du dispositif selon ce mode de réalisation, le boîtier de l'appareil électrique modulaire étant partiellement représenté,
les figures 2 à 5 montrent des séquences de fonctionnement du dispositif, en coupe longitudinale médiane, de la figure 1 lors du retrait d'un appareil électrique modulaire,
la figure 6 montre, en coupe longitudinale médiane, le dispositif de la figure 1 lors de la mise en place de l'appareil électrique modulaire sur un rail de support, et
la figure 7 est une vue en élévation d'un groupe d'appareils électriques modulaires et d'une barre omnibus, l'un de ces appareils étant en cours de mise en place ou de retrait.

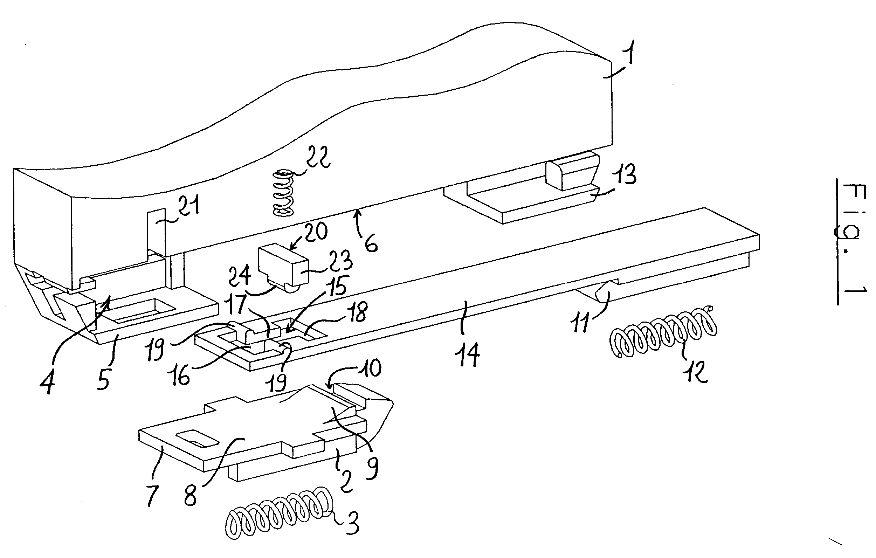

A la figure 1, un boîtier d'appareil électrique modulaire est représenté partiellement et est désigné par le repère numérique 1. Le dispositif de clipsage de cet appareil comprend un loquet 2 muni d'un ressort de rappel 3 et monté coulissant dans un logement 4 prévu à cet effet dans une partie 5 en saillie par rapport au fond 6 du boîtier 1, ledit loquet 2 étant sollicité par son ressort 3 en direction du centre du fond 6 du boîtier. A sa partie tournée vers l'extérieur du boîtier 1, le loquet 2 comprend un oeillet rectangulaire 7 qui dépasse de la partie 5. Le loquet 2 est muni d'une surface de contact supérieure 8 comportant une rampe 9 aboutissant à un évidement 10.

Le dispositif de clipsage comprend en outre un deuxième loquet 11, à ressort de rappel 12, qui est monté coulissant dans une partie 13 en saillie sur le fond 6 du boîtier 1, à l'extrémité du boîtier opposée au loquet 2. Le ressort 12 sollicite le loquet 11 vers le centre du fond 6 du boîtier 1. Le loquet 11 est muni d'un prolongement en forme de lame ou tiroir 14 qui s'étend sensiblement au contact du fond 6 du boîtier 1 jusqu' au voisinage de l'extrémité opposée du boîtier 1. A son extrémité voisine du loquet 2, le tiroir 14 présente un logement 15 en "H", comprenant une partie transversale 16 qui est située près de l'extrémité libre du tiroir 14 et qui se prolonge en direction du loquet 11 par un passage 17 plus étroit, débouchant dans une deuxième partie transversale 18 analogue à la première. A l'extrémité du passage 17 tournée vers la partie transversale 16, le tiroir 14 comporte en outre, de chaque côté du passage 17, une partie en saillie ou came 19 dirigée vers le boîtier 1.

Le dispositif de clipsage comprend encore un taquet 20 coulissant dans une cavité 21 pratiquée dans le fond 6 du boîtier 1. Le taquet 20 est sollicité par un ressort 22 placé dans ladite cavité 21 en direction du loquet 2. Le taquet 20 comprend une partie large 23 de forme complémentaire des parties transversales 16 et 18 du logement 15 et une extrémité libre inférieure 24, plus étroite, dont la largeur est légèrement inférieure à celle du passage 17.

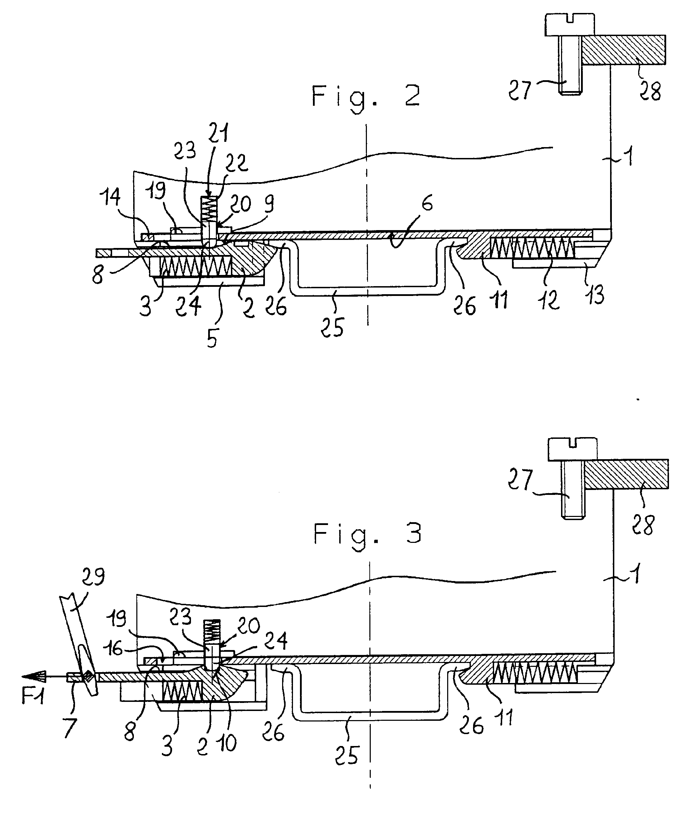

On se réfère maintenant aux figures 2 à 6 qui expliquent schématiquement le fonctionnement du dispositif de clipsage de la figure 1. Le figure 2 montre l'appareil électrique modulaire en place sur un rail de support 25 à ailes d'accrochage 26, la borne latérale, schématisée par la pièce 27, étant en prise avec une barre omnibus 28 d'alimentation ou de pontage. Les deux loquets 2 et 11 sont en position dite de repos, alignée par rapport au boîtier 1 de l'appareil électrique modulaire, et en prise avec les ailes d'accrochage 26 du rail de support 25. Le taquet 20 traverse la partie transversale 18 du logement 15 et s'appuie par son extrémité inférieure 24 contre la surface de contact 8 du loquet 2, sous l'action de son ressort 22. La partie large 23 est en prise dans ladite partie transversale 18, ce qui immobilise le tiroir 14 et donc le loquet 11.

A la figure 3, on actionne le loquet 2 dans le sens de la flèche F1, par exemple au moyen d'une pointe de tournevis 29 introduite dans le trou de l'oeillet rectangulaire 7, pour amener ledit loquet 2 en position écartée par rapport au rail de support 25, contre l'action du ressort de rappel 3. Lors du déplacement du loquet 2, le taquet 20 parcourt la surface de contact 8 et la rampe 9, puis s'introduit par son extrémité inférieure 24 dans l'évidement 10 du loquet 2, ce qui immobilise celui-ci en position écartée. Dans cette position, la partie large 23 du taquet 20 se situe sensiblement au-dessus du tiroir 14, c'est-à-dire en dehors du logement 15.

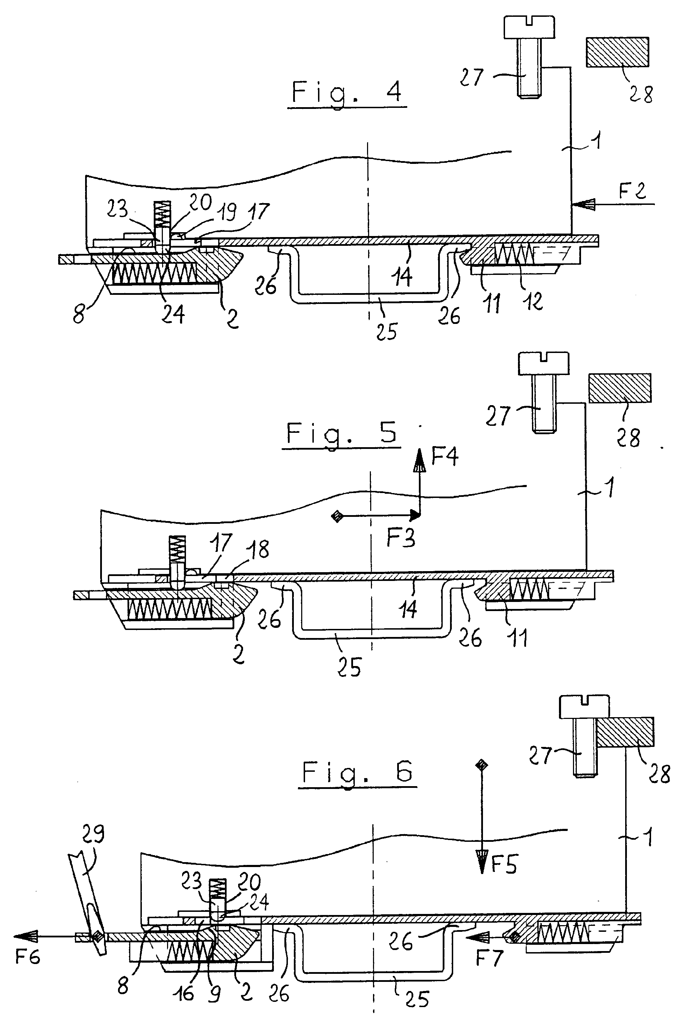

Le tiroir 14 et donc le loquet 2 ne sont par conséquent plus immobilisés par le taquet 20, puisque l'extrémité inférieure 24, du taquet 20, qui est introduite dans la partie transversale 18 du logement 15 est capable de coulisser le long du passage 17 jusqu'à la partie transversale 16 dudit logement 15. On assure cela en imprimant un mouvement de translation au boîtier 1 dans le sens de la flèche F2 de la figure 4 contre l'action du ressort 12 du loquet 11. Pendant ce mouvement, le taquet 20 parcourt le passage 17, puis la partie large 23 du taquet 20 rencontre la came 19, est soulevée par celle-ci, ce qui provoque le dégagement du taquet 20 de l'évidement 10 et libère le loquet 2 qui revient à sa position de repos. Le taquet 20 pénètre alors dans la partie transversale 16 du logement 15, la partie large 23 coopérant avec ladite partie 16 pour immobiliser en position le loquet 11 et l'extrémité inférieure 24 du taquet 20 reposant contre la surface de contact 8 du loquet 2.

Lorsque le loquet 11 est en position écartée par rapport au boîtier 1, la distance séparant le loquet 2 au repos et le loquet 11 est supérieure à la largeur hors-tout du rail de support 25. Il suffit donc maintenant d'imprimer au boîtier un petit mouvement approprié en direction de la barre omnibus 28 dans le sens de la flèche F3 de la figure 5, puis un mouvement ascendant dans le sens de la flèche F4, pour dégager l'appareil électrique modulaire du rail de support.

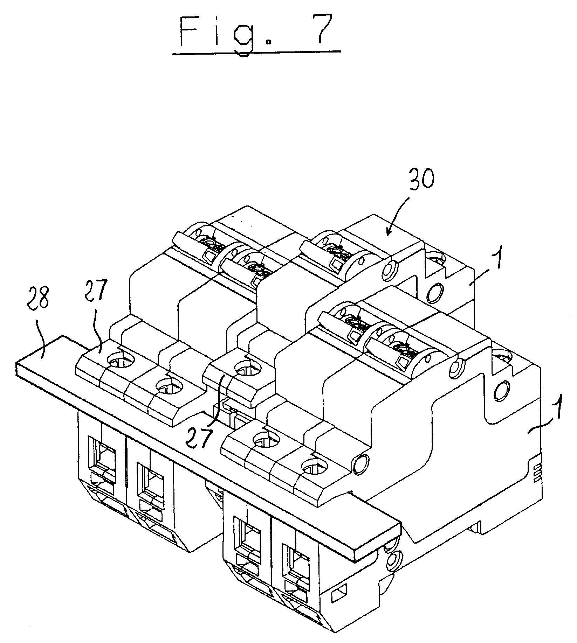

La figure 6 illustre la mise en place de l'appareil électrique modulaire sur le rail de support 25. Pour cette mise en place, on arme le loquet 11 de façon à être dans la situation de la figure 5. On place l'appareil sur le rail (flèche F5), puis on actionne le loquet 2 dans le sens de la flèche F6. Au cours de ce mouvement, le taquet 20 parcourt la surface de contact 8 du loquet 2. La rampe 9 du loquet 2 dégage la partie large 23 de la partie transversale 16 du logement 15, ce qui libère le tiroir 14 et le loquet 11. L'action du ressort 12 provoque (flèche F7) le déplacement du tiroir 14 vers la position du loquet 11 alignée avec le boîtier 1. On peut alors imprimer au boîtier le mouvement de translation en direction de la barre omnibus. On aboutit à la situation représentée à la figure 2.

La figure 7 illustre la mise en place ou l'extraction d'un appareil électrique modulaire 30, comportant le dispositif de clipsage décrit précédemment.

## Revendications

1. Dispositif de clipsage d'appareils électriques modulaires à juxtaposer, qui est destiné à assurer la mise en place de ces appareils sur un rail de support (25) muni de deux ailes d'accrochage (26) et leur retrait de celui-ci, et qui comporte un loquet (11) agencé de façon à pouvoir être déplacé entre une position rapprochée de l'une des ailes (26) du rail de support (25) et une position écartée dudit rail contre l'action d'un organe de rappel individuel, (12) tel qu'un ressort, qui tend à l'amener vers le centre du boîtier (1) de l'appareil, et un organe de blocage complémentaire agencé pour se bloquer contre l'autre desdites ailes (6) du rail de blocage (25), lesdits appareils électriques comportant des bornes latérales (27) destinées à être reliées à une barre omnibus (28) d'alimentation ou de pontage, et dans lequel ledit loquet (11) est porté par des moyens (6) agencés de manière à permettre la translation du boîtier (1) de l'appareil électrique modulaire parallèlement au plan passant par les ailes (26) du rail de support (25), dans le sens du rapprochement ou de l'écartement des bornes latérales (27) par rapport à la barre omnibus (28), caractérisé en ce que ledit moyen de blocage est un deuxième loquet (2) opposé au premier loquet (11) par rapport à la barre omnibus (28), agencé de façon à pouvoir être déplacé entre sa position rapprochée de ladite aile (26), et une position éloignée de ladite aile (26) contre l'action d'un organe de rappel individuel (3), tel qu'un ressort, qui tend à l'amener vers le centre du boîtier (1) de l'appareil, ledit second loquet (2) formant un moyen de commande pour la translation du boîtier (1) par rapport audit premier loquet (11).

2. Dispositif de clipsage selon la revendication 1, caractérisé en ce que ledit premier loquet (11) situé du côté de la barre omnibus (28) coopère avec un moyen verrouillable (20) permettant de rendre ledit loquet (11) déplaçable par rapport au boîtier (1) ou d'immobiliser ledit loquet (11) dans sa position écartée par rapport audit boîtier (1) ou dans sa position de repos alignée avec celui-ci.

3. Dispositif de clipsage selon la revendication 2, caractérisé en ce que ledit premier loquet (11) situé du côté de la barre omnibus (28) se prolonge par un élément en forme de lame ou tiroir (14) qui s'étend sensiblement au contact du fond (6) du boîtier (1) pour venir coopérer avec ledit moyen verrouillable (20) situé au voisinage de l'autre loquet (2).

4. Dispositif de clipsage selon la revendication 3, caractérisé en ce que le moyen verrouillable (20) comprend un taquet (20) monté coulissant dans une cavité (21) pratiquée dans le fond (6) du boîtier (1) et sollicité en direction du tiroir (14) par un organe élastique (22) tel qu'un resort, ledit taquet (20) étant agencé de manière à pouvoir venir en prise dans un logement (15) pratiqué dans le tiroir (14).

5. Dispositif de clipsage selon la revendication 4, caractérisé en ce que le logement (15) pratiqué dans le tiroir (14) comprend une partie (18) sensiblement alignée avec la direction de débattement du taquet (20), lorsque ledit premier loquet (11) à tiroir (14) est dans sa position de repos, ainsi qu'une partie (16) sensiblement alignée avec ladite direction de débattement du taquet (20) lorsque ledit premier loquet (11) à tiroir (14) est dans sa position écartée par rapport au boîtier (1), le passage du taquet (20), d'une partie à une autre du logement étant assuré par le mouvement relatif du boîtier (1) par rapport audit premier loquet (11) à tiroir (14) lorsque ledit taquet (20) est actionné contre l'action de son organe élastique (22) vers sa position de libération par rapport au logement (15).

6. Dispositif de clipsage selon la revendication 5, caractérisé en ce que ledit second loquet (2) opposé à la barre omnibus (29) comprend une rampe (9) conçue pour actionner le taquet (20) contre l'action de son organe élastique (22) lors de l'actionnement dudit second loquet (2) dans le sens de son écartement par rapport au rail (25) ou au boîtier (1).

7. Dispositif de clipsage selon la revendication 6, caractérisé en ce que, sensiblement au sommet de la rampe (9), le second loquet (2) opposé à la barre omnibus (28) comprend un évidement (10) qui est sensiblement aligné avec la direction de débattement (20) lorsque ledit second loquet (2) est en position écartée et qui est destiné à recevoir l'extrémité libre (24) du taquet (20).

8. Dispositif de clipsage selon la revendication 7, caractérisé en ce que lesdites parties (16, 18) du logement (15) pratiqué dans le tiroir (14) sont réunies ensemble par un passage (17) plus étroit agencé de manière à pouvoir servir de guide à l'extrémité libre (24) du taquet (20).

9. Dispositif de clipsage selon la revendication 8, caractérisé en ce que, de part et d'autre dudit passage (17), ledit tiroir (14) comporte une came (19) drigée vers le boîtier (1) et destinée à coopérer avec le taquet (20) pour libérer celui-ci de l'évidement (10) du loquet (2) opposé à la barre omnibus (28) lors du mouvement relatif du boîtier (1) par rapport au tiroir (14).

10. Appareil électrique modulaire (30) comprenant le dispositif de clipsage selon l'une quelconque des revendications 1 à 9.

## Patentansprüche

1. Klemmhalterungsvorrichtung für nebeneinander zu positionierende modulare elektrische Geräte, die dazu bestimmt ist, das Anordnen dieser Geräte auf einer Tragschiene (25) sowie das Abnehmen dieser Geräte zu sichern, die mit zwei Einhängeflanschen (26) versehen ist, und die eine Sperrklinke (11), die zwischen einer an einen der Flansche (26) der Tragschiene (25) angenäherten Position und einer von diesem Flansch abgerückten Position gegen die Einwirkung eines individuellen Rückstellorgans, wie beispielsweise einer Feder, verstellbar ist, das dazu neigt, die Sperrklinke zum Zentrum des Gehäuses (1) des Geräts mitzunehmen, und ein komplemantäres Sperrorgan umfaßt, das gegen den anderen der Flansche (6) der Tragschiene (25) verspannbar ist, wobei die elektrischen Geräte seitliche Klemmen (27) umfassen, die dazu bestimmt sind, mit einer Strom- oder Verbrückungs-Sammelschiene (28) verbunden zu werden, und in denen die Sperrklinke (11) durch Mittel (6) getragen ist, die die Verschiebung des Gehäuses (1) des modularen elektrischen Geräts in der Annäherungs- und Abrückrichtung der seitlichen Klemmen (27) in bezug auf die Sammelschiene (28) parallel zu der Ebene zulassen, die von den Flanschen (26) der Tragschiene (25) durchsetzt ist, dadurch gekennzeichnet, daß das Sperrorgan eine der ersten Sperrklinke in bezug auf die Sammelschiene (28) gegenüberliegende zweite Sperrklinke (2) ist, die zwischen ihrer dem Flansch (26) angenäherten Position und einer von diesem Flansch (26) entfernten Position gegen die Einwirkung eines individuellen Rückstellorgans, wie beispielsweise einer Feder, verstellbar ist, das dazu neigt, diese Sperrklinke zum Zentrum des Gehäuses (1) des Geräts mitzunehmen, wobei die zweite Sperrklinke (2) eine Steuereinrichtung für die Verstellung des Gehäuses (1) in bezug auf die erste Sperrklinke (11) bildet.

2. Klemmhalterungsvorrichtung nach Anspruch 1, dadurch gekennzeichnet, daß die seitlich der Sammelschiene (28) angeordnete erste Sperrklinke (11) mit einer verriegelbaren Einrichtung (20) zusammenwirkt, die zuläßt, daß diese Sperrklinke (11) in bezug auf das Gehäuse (1) verstellbar oder in ihrer in bezug auf das Gehäuse (1) abgerückten Position oder in ihrer Ruheposition, in der sie mit dem Gehäuse ausgerichtet ist, festsetzbar ist.

3. Klemmhalterungsvorrichtung nach Anspruch 2, dadurch gekennzeichnet, daß die seitlich der Sammelschiene (28) angeordnete erste Sperrklinke (11) durch ein Element in Gestalt eines Streifens oder eines Schiebers (14) verlängert ist, der zum Zusammenwirken mit der benachbart zur anderen Sperrklinke (2) angeordneten verriegelbaren Einrichtung (20) im wesentlichen in Kontakt mit dem Boden (6) des Gehäuses (1) verläuft.

4. Klemmhalterungsvorrichtung nach Anspruch 3, dadurch gekennzeichnet, daß die verriegelbare Einrichtung (20) einen Stößel (20) umfaßt, der in einer im Boden (6) des Gehäuses (1) ausgebildeten Vertiefung (21) gleitend angebracht und in Richtung des Schiebers (14) durch ein elastisches Organ (22), wie beispielsweise eine Feder, vorgespannt ist, wobei der Stößel (20) in Eingriff mit einem im Schieber (14) ausgebildeten Sitz (15) bringbar ist.

5. Klemmhalterungsvorrichtung nach Anspruch 4, dadurch gekennzeichnet, daß der im Schieber (14) ausgebildete Sitz (15) einen Bereich (18), der im wesentlichen mit der Durchfederungsrichtung des Stößels (20) ausgerichtet ist, wenn sich die erste Sperrklinke (11) mit dem Schieber (14) in ihrer Ruheposition befindet, sowie einen Bereich (16) umfaßt, der im wesentlichen mit der Durchfederungsrichtung des Stößels (20) ausgerichtet ist, wenn sich die erste Sperrklinke (11) mit dem Schieber (14) in ihrer in bezug auf das Gehäuse (1) abgerückten Position befindet, wobei der Übergang des Stößels (20) von einem Sitzbereich zum anderen durch die Relativbewegung des Gehäuses (1) in bezug auf die erste Sperrklinke (11) mit dem Schieber (14) gesichert ist, wenn der Stößel (20) gegen die Einwirkung seines elastischen Organs (22) in Richtung auf seine Freigabeposition in bezug auf den Sitz (15) betätigt ist.

6. Klemmhalterungsvorrichtung nach Anspruch 5, dadurch gekennzeichnet, daß die der Sammelschiene (28) gegenüberliegende zweite Sperrklinke (2) eine Rampe (9) umfaßt, die zur Betätigung des Stößels (20) gegen die Einwirkung seines elastischen Organs (22) auf die Betätigung der zweiten Sperrklinke (2) in ihrer Abrückrichtung in bezug auf die Schiene (25) oder das Gehäuse (1) hin ausgelegt ist.

7. Klemmhalterungsvorrichtung nach Anspruch 6, dadurch gekennzeichnet, daß die der Sammelschiene (28) gegenüberliegende zweite Sperrklinke (2) im wesentlichen am Scheitel der Rampe (9) eine Ausnehmung (10) umfaßt, die im wesentlichen mit der Durchfederungsrichtung (20) ausgerichtet ist, wenn die zweite Sperrklinke (2) sich in der abgerückten Position befindet, und die zur Aufnahme des freien Endes (24) des Stößels (20) bestimmt ist.

8. Klemmhalterungsvorrichtung nach Anspruch 7, dadurch gekennzeichnet, daß die im Schieber (14) ausgebildeten Bereiche (16, 18) des Sitzes (15) über einen engeren Durchgang (17) miteinander vereinigt sind, der als Führung für das freie Ende (24) des Stößels (20) dient.

9. Klemmhalterungsvorrichtung nach Anspruch 8, dadurch gekennzeichnet, daß der Schieber (14) von einem Bereich des Durchgangs (17) zum anderen einen Nocken (19) umfaßt, der in Richtung auf das Gehäuse (1) verläuft und dazu bestimmt ist, mit dem Stößel (20) zusammenzuwirken, um diesen aus der Ausnehmung (10) der der Sammelschiene (28) gegenüberligenden Sperrklinke (2) aufgrund der Relativbewegung des Gehäuses (1) in bezug auf den Schieber (14) zu befreien.

10. Modulares elektrisches Gerät (30) umfassend die Klemmhalterungsvorrichtung nach einem der vorangehenden Ansprüche 1 bis 9.

## Claims

1. A clipping device for modular electrical devices to be juxtaposed, intended to effect the placing of such devices on a support rail (25) fitted with two hooking wings (26) and their withdrawal therefrom, the clipping device comprising a latch (11) designed to be able to be moved between a position close to one of the wings (26) of the support rail (25) and a position spaced from the said rail against the action of an individual return member (12) such as a spring which tends to bring it towards the centre of the casing (1) of the device, and an additional locking member designed to lock against the other of the said wings (6) of the support rail (25), the said electrical devices including lateral terminals (27) intended to be connected to be connected to a bus bar (28) for supplying or shorting-out, and wherein the said latch (11) is supported by means (6) designed to allow the translation of the casing (1) of the modular electrical device parallel to the plane passing through the wings (26) of the support rail (25), bringing nearer or moving apart the lateral terminals (27) relative to the bus bar (28), characterized in that the said locking means is a second latch (2) oppositely to the first latch (11), relative to the bus bar (28), designed so as to be able to be moved between its position close to the said wing (26) and a position spaced from the said wing (26) against the action of an individual return member (3), such as a spring which tends to bring it towards the centre of the casing (1) of the device, the said second latch (2) forming a control means for the translation of the casing (1) relative to the said first latch (11).

2. A clipping device according to claim 1, characterized in that the said first latch (11) situated on the bus bar (28) side cooperates with a latchable means (20) enabling the said latch (11) to be made movable relative to the casing (1) or the immobilization of the said latch (11) in its position spaced relative to the said casing (1) or in its rest position aligned on the latter.

3. A clipping device according to claim 2, characterized in that the said first latch (11) situated on the bus bar (28) side is extended by a blade-shaped or slide-shaped element (14) which extends substantially in contact with the bottom (6) of the casing (1) to come to cooperate with the said latchable means (20) situated in the vicinity of the other latch (2).

4. A clipping device according to claim 3, characterized in that the latchable means (20) includes a stop (20) slidably mounted in a cavity (21) made in the bottom (6) of the casing (1) and biased in the direction of the slide (14) by a resilient means (22) such as a spring, the said stop (20) being designed so as to engage into a housing (15) providad in the slide (14).

5. A clipping device according to claim 4, characterized in that the housing (15) made in the slide (14) includes a part (18) substantially aligned in the direction of to and fro movement of the stop (20) when the said first latch (11) with slide (14) is in its rest position, as vell as a part (16) substantially aligned in the said direction of to and fro movement of the stop (20) when the said first latch (11) with slide (14) is in its position spaced relative to the casing (1), the passage of the stop (20) from one part to the other of the housing being ensured by the relative movement of the casing (1) relative to the said first latch (11) with slide (14) when the said stop (20) is actuated against the action of its resilient member (22) towards its release position relative to the housing (15).

6. A clipping device according to claim 5, characterized in that the said second latch (2) opposite the bus bar (29) includes a ramp designed to actuate the stop (20) against the action of its resilient member (22) when the said second latch (2) is actuated in the direction of its spacing away from the rail (25) or the casing (1).

7. A clipping device according to claim 6, characterized in that, substantially at the top of the ramp (9), the second latch (2) opposite the bus bar (28) includes a recess (10) which is substantially aligned on the direction of to and fro movement (20) when the said second latch (2) is in spaced position, and which is intended to receive the free end (24) of the stop (20).

8. A clipping device according to claim 7, characterized in that the said parts (16, 18) of the housing (15) made in the slide (14) are joined together by a narrower passage (17) designed to be able to act as a guide for the free end (24) of the stop (20).

9. A clipping device according to claim 8, characterized in that, on both sides of the said passage (17), the said slide (14) includes a cam (19) directed towards the casing (1) and intended to cooperate with the stop (20) to release it form the recess (10) of the latch (2) opposite the bus bar (28) during the displacement of the casing (1) relative to the slide (14).

10. A modular electrical device (30) including the clipping device according to any one of claims 1 to 9.
